# FASCICULE DE BREVET EUROPEEN

(11) **EP 4 178 854 B1**
(45) Date de publication et mention de la délivrance du brevet: **13.11.2024**
(21) Numéro de dépôt: 21739629.0
(22) Date de dépôt: 02.07.2021
(51) Int. Cl.: B64C 1/34

(54) **AÉRONEF SANS PILOTE TÉLÉCOMMANDÉ COMPRENANT UNE STRUCTURE GONFLABLE**
FERNGESTEUERTES UNBEMANNTES FLUGZEUG MIT EINER AUFBLASBAREN STRUKTUR
REMOTELY CONTROLLED UNMANNED AIRCRAFT WITH AN INFLATABLE STRUCTURE

(30) Priorité: 09.07.2020 FR 2007290
(43) Date de publication de la demande: 17.05.2023
(73) Titulaire: Diodon Drone Technology, 31670 Labege (FR)
(72) Inventeur: LUCIANI, Roman, 31400 TOULOUSE (FR)
(74) Mandataire: Argyma
(86) Numéro de dépôt international: PCT/EP2021/068296
(87) Numéro de publication internationale: WO 2022/008365

(56) Documents cités:
- WO-A1-2014/207732
- CN-A- 106 081 099
- CN-A- 107 554 749
- CN-U- 207 274 966
- US-B2- 10 501 164
- ANONYMOUS: "XT-XINTE RC RTF GPS Drone HMF600 Carbon Fiber Foldable H-Shaped Quadcopter Hexacopter APM2.8 with Motor ESC AT10 TX&RX Gimbal F11101-D: Amazon.co.uk: Toys & Games", WWW.AMAZON.CO.UK, 10 July 2015 (2015-07-10), XP055789782, Retrieved from the Internet <URL:https://www.amazon.co.uk/XT-XINTE-Foldable-H-Shaped-Quadcopter-Hexacopter/dp/B011BBO5FW> [retrieved on 20210325]

## Description

### Domaine technique

La présente invention concerne le domaine des aéronefs sans pilote télécommandés, qui sont connus de l'homme du métier sous la désignation de « drone ». L'invention concerne plus précisément un aéronef sans pilote télécommandé comprenant une structure gonflable.

Par souci de concision un aéronef sans pilote télécommandé sera désigné par la suite « drone ».

De manière connue, un drone comporte une structure rigide sur laquelle sont montés plusieurs moteurs, généralement au nombre de quatre, pour faire voler le drone. Le drone comporte également un module de gestion, relié à la structure rigide du drone, qui est adapté pour recevoir des commandes de manière sans fil et pour piloter les moteurs en fonction des commandes reçues. Un utilisateur peut ainsi diriger le drone lors de son vol, par exemple, au moyen d'une télécommande ou d'un téléphone. De manière connue, le drone peut également comporter un équipement d'enregistrement (caméra vidéo, etc.) qui est fixé à la structure rigide du drone et est relié fonctionnellement au module de gestion. De manière connue, le module de gestion comporte également une batterie d'alimentation afin d'alimenter électriquement les moteurs et les équipements du drone.

Afin de permettre à un utilisateur de transporter facilement un drone, il est connu des drones pliables évoluant entre une position de stockage, dans laquelle leur envergure est réduite, et une position d'utilisation, dans laquelle leur envergure est importante. A ce titre, on connait par exemple du document FR3048411A1 du demandeur, un drone comprenant une structure principale, permettant le support des moteurs, flexible et gonflable de manière à permettre le pliage de la structure principale selon des angles divers et variés et le stockage du drone par exemple dans un sac à dos. La structure principale comporte une enveloppe extérieure de protection et une enveloppe intérieure extensible gonflable, similaire à une chambre à air, gonflée au moyen d'une cartouche à air comprimé par exemple. Le document CN106081099B divulgue un aéronef multi-rotor ayant un bord d'attaque d'aile fixe rigide dont le côté arrière est fixé avec une aile gonflable.

La structure principale décrite dans le document FR3048411A1 comporte plusieurs bras s'étendant en étoile. Un moteur est fixé à l'extrémité de chacun des bras de l'étoile pour répartir les moteurs autour du module de gestion et maximiser l'envergure du drone en position d'utilisation. Sur chaque bras, le moteur est fixé sur une surface supérieure (ou inférieure) de manière à générer un flux d'air descendant pour stabiliser le drone en vol.

Cependant une telle structure principale en forme d'étoile nécessite de positionner le module de gestion de manière précise à l'intersection des bras en étoile ce qui nécessite l'ajout d'un châssis de forme complexe et donc coûteux.

De plus, la structure principale gonflable est fabriquée en tissu et réalisée d'un seul tenant pour permettre le gonflage simultané de tous les bras via une unique valve de gonflage. Aussi, les bras sont reliés entre eux par plusieurs coutures, ce qui augmente le coût. De plus, les coutures sont soumises à des tolérances de fabrication, qui peuvent entrainer un désaxage vertical des moteurs, ce qui présente un inconvénient important. En effet, un alignement imprécis des moteurs augmente l'instabilité du drone en vol. Aussi, il est souvent nécessaire de procédé au réglage de l'orientation des moteurs sur chaque bras. Un tel réglage est complexe et ne peut pas toujours être réalisé de manière précise lors du remplacement d'un moteur par un utilisateur par exemple.

L'invention vise ainsi à éliminer au moins certains de ces inconvénients en proposant un aéronef sans pilote télécommandé comprenant une structure principale flexible et gonflable de manière à évoluer entre une envergure importante et une envergure réduite, tout en proposant une structure simple permettant de limiter les risques de désalignement des moteurs et de s'assurer d'une bonne stabilité de l'aéronef en vol.

### PRESENTATION DE L'INVENTION

L'invention concerne un aéronef sans pilote télécommandé comprenant au moins deux moteurs, configurés pour permettre le vol de l'aéronef, et une structure principale de support desdits moteurs, la structure principale étant flexible et gonflable de manière à permettre le pliage de la structure principale entre une position de stockage et une position d'utilisation. L'aéronef est remarquable en ce que la structure principale comporte :
- un châssis support s'étendant longitudinalement entre une extrémité amont et une extrémité aval suivant un axe longitudinal, et
- uniquement deux bras gonflables reliés au châssis support respectivement au niveau de l'extrémité amont et de l'extrémité aval, chaque bras gonflable s'étendant orthogonalement au châssis support, de manière à former une structure principale en forme de H.

L'aéronef sans pilote télécommandé présente ainsi une structure gonflable de forme simple, qui comporte peu de coutures, à la différence de la structure en forme d'étoile de l'art antérieur. Ainsi, une telle structure principale permet de limiter les risques de détériorations de chaque bras gonflable qui peuvent affecter leur étanchéité et leur solidité. Les contraintes de fabrication sont également fortement réduites, ce qui permet en outre de réduire les coûts et les temps de fabrication.

La structure principale selon l'invention permet également de s'affranchir du risque de désalignement d'un moteur par rapport aux autres moteurs, ce qui peut entrainer des perturbations en vol. La structure permet notamment de limiter le risque de désalignement de deux moteurs montés sur un même bras gonflable. Un bras gonflable longitudinal indépendant peut en effet être réalisé de manière simple pour orienter ses moteurs selon un même axe. Un alignement précis de deux moteurs permet de limiter le risque de rotation de l'un des moteurs à un régime plus élevé pour compenser le désalignement de l'autre. A des vitesses élevées, le régime des deux moteurs est ainsi similaire, ce qui permet le vol de l'aéronef à des vitesses élevées, en s'affranchissant du risque de saturation de l'un des moteurs avant l'autre. L'aéronef présente également une meilleure stabilité en vol et une meilleure maniabilité.

Grâce à la structure principale selon l'invention, en cas de défaillance d'un moteur ou en cas de perçage d'un bras gonflable par exemple, le remplacement du bras peut facilement être effectué par un utilisateur. La forme de la structure principale permet un réglage simplifié de la position axial de chaque bras gonflable. De même, la structure principale présentant une forme simple, le remplacement d'une chambre à air peut également être réalisé de façon simple et rapide.

L'aéronef selon l'invention peut également évoluer entre une position de stockage, dans laquelle les bras gonflables sont dégonflés et dans laquelle l'aéronef présente un encombrement réduit, lui permettant d'être facilement transportable, voire d'être stocké par exemple dans un sac à dos, et une position d'utilisation, dans laquelle les bras gonflables sont gonflés et dans laquelle l'aéronef présente une envergure importante. Les bras gonflables permettent une structure principale légère, permettant une autonomie plus longue de l'aéronef.

De manière préférée, chaque bras gonflable comprenant deux portions latérales comprenant chacune une extrémité de support de moteur, chaque portion latérale possède une section décroissante vers l'extrémité de support. Une section décroissante permet de limiter le volume du bras gonflable sous l'écoulement d'air de l'hélice du moteur, permettant de limiter les perturbations de l'écoulement du flux d'air généré par le moteur et donc de limiter les pertes de puissance du moteur. Autrement dit, le rendement du moteur est augmenté, ce qui permet d'augmenter la vitesse de l'aéronef. De plus, la consommation du drone est limitée, ce qui permet d'augmenter son autonomie.

De manière préférée, les portions latérales sont inclinées de manière à former un bras gonflable coudé. Une telle inclinaison des portions latérales permet de rehausser la ligne de flottaison de l'aéronef lorsqu'il est posé sur une étendue d'eau, ce qui permet à l'aéronef de pouvoir décoller plus facilement et plus rapidement depuis la surface de l'eau.

De plus, une extrémité de support d'un moteur inclinée permet au moteur de générer un flux d'air orienté vers l'extérieur de l'aéronef, ce qui limite avantageusement les risques de perturbations du flux d'un même moteur et des flux des différents moteurs entre eux. Un flux d'air orienté vers l'extérieur permet notamment d'assurer une bonne stabilité de l'aéronef en descente, puisque celui-ci ne traverse pas le flux d'air des hélices des moteurs. Une zone de surpression est également créée sur l'extérieur de l'aéronef, ce qui permet de le stabiliser dans sa trajectoire descendante vers la zone centrale qui est à plus basse pression.

De manière préférée, chaque bras gonflable définissant un axe orthogonal audit axe longitudinal, chaque portion latérale est inclinée par rapport audit axe orthogonal d'un angle d'inclinaison compris entre 5 et 30 °. De préférence, l'angle d'inclinaison est compris entre 5 et 10°. Un tel angle d'inclinaison permet d'orienter le flux d'air généré par le moteur suffisamment pour assurer la stabilité de l'aéronef en vol et en particulier en descente, comme décrit précédemment.

De préférence, chaque portion latérale présente une forme tronconique, conférant à chaque bras gonflable une forme aérodynamique, permettant de limiter les perturbations du flux d'air généré par chaque moteur. Une forme tronconique permet également une meilleure répartition des efforts de gonflage dans le bras gonflable, ce qui permet une meilleure résistance et une durée de vie plus importante.

Dans une forme de réalisation, chaque bras gonflable comprend une portion centrale de forme cylindrique entre les deux portions latérales, permettant à chaque bras gonflable de comprendre une surface droite alignée avec le châssis support, permettant une liaison simple et directe entre le châssis support et chaque bras gonflable.

De manière préférée, le châssis support est relié à chaque bras gonflable au niveau de la portion centrale, permettant une meilleure répartition des moteurs autour du châssis support, chacun étant ainsi à équidistance du centre de l'aéronef. L'aéronef est ainsi plus stable en vol.

Selon une forme de réalisation préférée, le châssis support est relié aux deux bras gonflables de manière amovible. L'aéronef est ainsi plus compact en position de stockage. De plus, un bras gonflable amovible peut aisément être remplacé en cas de défaillance par exemple, sans nécessité le remplacement de l'ensemble de la structure principale.

De manière préférée, chaque bras gonflable comprend au moins un organe d'accrochage au châssis support, permettant une liaison simple et rapide entre le châssis support et les bras gonflables.

De manière préférée, le châssis support comprenant au moins un orifice de fixation, l'organe d'accrochage se présente sous la forme d'une lanière solidaire d'un bras gonflable, configurée pour s'insérer dans l'orifice de fixation du châssis support. Une fixation solidaire du bras gonflable permet de s'assurer du positionnement des moteurs lorsque l'aéronef est en position d'utilisation, ce qui permet avantageusement de limiter les risques de désalignement des moteurs et donc les perturbations en vol.

De préférence, l'organe d'accrochage se présente sous la forme d'une lanière qui présente une longueur déterminée par rapport au diamètre du bras gonflable, permettant de guider la position axial du bras gonflable par rapport au châssis support. Le remplacement d'un bras gonflable est ainsi simple et rapide à réaliser pour un utilisateur.

Dans une forme de réalisation, l'organe d'accrochage se présente sous la forme d'une fixation de type boucles et crochets, connue sous la désignation Velcro ^{®}. Ainsi, la fixation de chaque bras gonflable peut être réalisée de manière simple et rapide, sans nécessiter l'utilisation d'un outillage particulier.

De manière alternative, l'organe d'accrochage se présente sous la forme d'une lanière comprenant au moins un bouton pression.

De manière préférée, chaque bras gonflable comprenant deux extrémités, l'aéronef comprenant quatre moteurs, un moteur est fixé à chaque extrémité de chaque bras gonflable. Une telle configuration permet de maximiser l'envergure de l'aéronef, ce qui augmente sa stabilité en vol.

De préférence, chaque bras gonflable présente une longueur comprise entre 100 mm et 2000 mm, permettant le montage d'aéronefs d'envergure importante en position d'utilisation.

Selon une forme de réalisation préférée, chaque bras gonflable présente un volume d'air de gonflage compris entre 10000 mm³ et 10000000 mm³, permettant une stabilité importante de l'aéronef en vol. La ligne de flottaison de l'aéronef est également rehaussée lorsque ce dernier est posé sur une étendue d'eau, tout en limitant la trainée des moteurs et donc la consommation de l'aéronef.

De préférence, chaque bras gonflable présente une section circulaire dont le diamètre est compris entre 10 mm et 250 mm.

De manière préférée, le châssis support présente une longueur suivant l'axe longitudinal comprise entre 100 mm et 2000 mm, permettant d'espacer les bras gonflables l'une de l'autre et ainsi d'augmenter l'envergure de l'aéronef.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
[Fig.1] La [Fig.1] est une représentation schématique d'un aéronef sans pilote télécommandé selon une forme de réalisation de l'invention en position d'utilisation.
[Fig.2] La [Fig.2] est une représentation schématique de dessous de l'aéronef de la [Fig.1].
[Fig.3] La [Fig.3] est une représentation schématique d'un bras gonflable de l'aéronef de la [Fig.1] selon une première forme de réalisation de l'invention.
[Fig.4] La [Fig.4] est une représentation schématique du profil du bras gonflable de la [Fig.3].
[Fig.5] La [Fig.5] est une représentation schématique d'un bras gonflable de l'aéronef de la [Fig.1] selon une deuxième forme de réalisation de l'invention.
[Fig.6] La [Fig.6] est une représentation schématique du profil du bras gonflable de la [Fig.5].
[Fig.7] La [Fig.7] est une représentation schématique de l'aéronef de la [Fig.1] dans la position de stockage.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

L'invention concerne un aéronef sans pilote télécommandé, qui sera désigné par la suite « drone » par souci de concision.

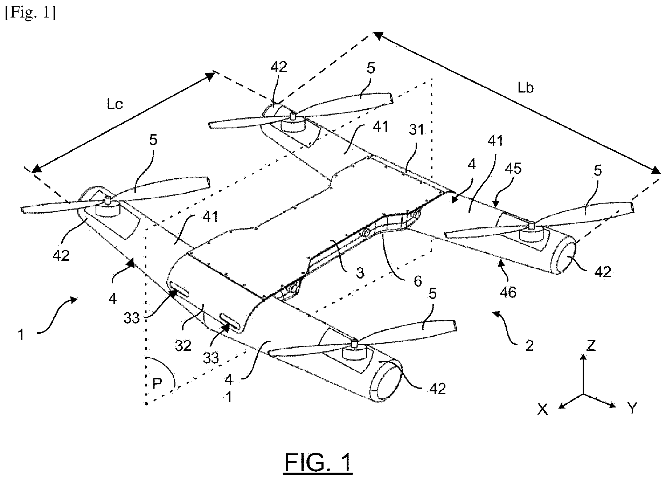

En référence à la [Fig.1], le drone 1 s'étend longitudinalement selon un axe longitudinal X, latéralement selon un axe latéral Y et verticalement selon un axe vertical Z, de manière à former un repère orthogonal (X, Y, Z). Par la suite, dans ce document, les termes « haut » et « bas » se réfèrent à l'axe vertical Z qui s'étend du bas vers le haut, lorsque le drone 1 est dans une position d'utilisation, comme représenté sur la [Fig.1]. De même, les termes « amont » et « aval » sont définis en référence à l'axe longitudinal X qui s'étend depuis l'amont vers l'aval du drone 1.

Le drone 1 comprend une pluralité de moteurs 5, configurés pour permettre le vol du drone 1 et une structure principale 2 de support des moteurs 5. Dans cet exemple, le drone 1 comprend quatre moteurs 5.

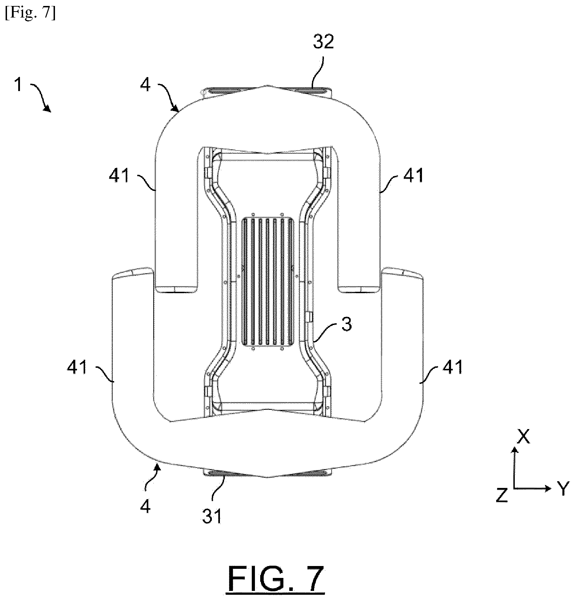

La structure principale 2 est flexible et gonflable de manière à permettre son pliage entre une position de stockage (représentée sur la [Fig.7]) et la position d'utilisation (représentée sur la [Fig.1]).

Toujours en référence à la [Fig.1], la structure principale 2 comprend un châssis support 3 et uniquement deux bras gonflables 4.

Comme illustré à la [Fig.1], le châssis support 3 s'étend longitudinalement entre une extrémité amont 31 et une extrémité aval 32 suivant l'axe longitudinal X. De préférence, le châssis support 3 se présente sous la forme d'une coque rigide, réalisée par exemple en matériau composite, de manière à être léger et robuste. Il va de soi que le châssis support 3 pourrait également être réalisé dans un matériau différent, par exemple thermoplastique ou métallique.

Dans cet exemple, le châssis support 3 présente de préférence une longueur Le suivant l'axe longitudinal X comprise entre 100 mm et 2000 mm, de manière à permettre une envergure importante. De préférence, sa largeur Ld, suivant l'axe latéral Y, est comprise entre 25 mm et 500 mm.

L'extrémité amont 31 et l'extrémité aval 32 présentent de préférence un profil courbe dans le plan (X, Z), de manière à coopérer avec les bras gonflables 4 par complémentarité de formes, en particulier, en suspension aux parties supérieures des bras gonflables 4. Plus précisément, dans cet exemple, comme représenté sur la [Fig.1], l'extrémité amont 31 et l'extrémité aval 32 présentent, dans le plan (X, Z), un profil concave, permettant la fixation des bras gonflables 4 au châssis support 3, comme cela sera décrit plus en détail par la suite.

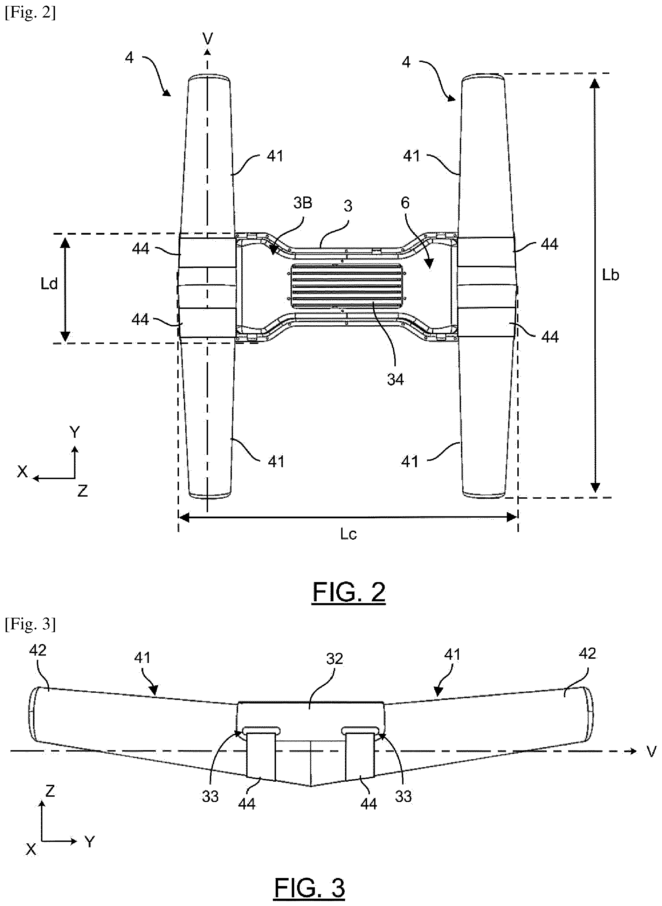

Dans une forme de réalisation préférée, le châssis support 3 comprend au niveau de l'extrémité amont 31 et de l'extrémité aval 32, une pluralité d'orifices de fixation 33, configuré chacun pour coopérer avec un organe d'accrochage 44 (représenté sur la [Fig.3]) de l'un des bras gonflables 4, comme cela sera décrit plus en détail par la suite. Les orifices de fixation 33 permettent une liaison amovible entre le châssis support 3 et chaque bras gonflable 4, permettant à la fois un drone 1 plus compact en position de stockage et un remplacement simple et rapide par exemple de l'un des bras gonflables 4 en cas d'endommagement.

Le châssis support 3 peut se présenter sous des formes diverses. Dans cet exemple, le châssis support 3 comporte un logement dans lequel est monté un module de gestion 6 pour commander les moteurs 5. Comme illustré à la [Fig.2], le châssis support 3 comporte une face inférieure 3B sur laquelle sont positionnés des ailettes de dissipation de chaleur 34. Le module de gestion 6 est ainsi situé entre les bras gonflables 4 et n'est pas contraint par ceux-ci.

Dans cette forme de réalisation, le module de gestion 6 (représenté sur la [Fig.1]) est relié électriquement à chaque moteur 5 afin de le commander. Pour cela, le module de gestion 6 est relié à chaque moteur 5 par une pluralité de câbles électriques (non représentés). De préférence, les câbles électriques sont montés dans chaque bras gonflable 4 afin de limiter le risque de câble flottant qui pourrait être entrainé dans les hélices des moteurs 5 et pourraient endommager le drone 1. Le module de gestion 6 est configuré de préférence pour recevoir des commandes de manière sans fil et piloter les moteurs 5 en fonction des commandes reçues. Un utilisateur peut ainsi diriger le drone 1 lors de son vol, par exemple, au moyen d'une télécommande ou d'un téléphone.

Comme décrit précédemment, le drone 1 comprend dans cet exemple deux bras gonflables 4, chaque bras gonflable 4 selon l'invention étant relié au châssis support 3 respectivement au niveau de l'extrémité amont 31 et de l'extrémité aval 32. De manière préférée, les deux bras gonflables 4 sont identiques, ce qui réduit le coût et améliore la logistique.

Comme représenté sur la [Fig.2], chaque bras gonflable 4 s'étend globalement de manière orthogonale au châssis support 3, suivant un axe orthogonal V, de manière à former une structure principale 2 en forme de H. L'axe orthogonal V de chaque bras gonflable 4 s'étend ainsi dans la même direction que l'axe latéral Y du drone 1. Chaque bras gonflable 4 présentant une forme longitudinale, la structure principale 2 présente une forme simple, permettant de limiter le nombre de coutures dans la structure principale 2 et ainsi de ne pas affecter la solidité de la structure principale 2 par comparaison à une forme en étoile.

Chaque bras gonflable 4 est configuré pour évoluer entre une configuration gonflée (correspondant à la position d'utilisation de la structure principale 2 représentée sur la [Fig.1]) et une configuration dégonflée (correspondant à la position de stockage de la structure principale 2 représentée sur la [Fig.7]). Ainsi le drone 1 peut être plié de manière pratique, de manière à présenter un encombrement réduit pour être rangé dans un sac à dos par exemple.

De manière préférée, chaque bras gonflable 4 présente une longueur Lb comprise entre 100 mm et 2000 mm, de manière à éloigner suffisamment les moteurs 5 d'un même bras gonflable 4 et permettre une envergure importante du drone 1. Il va de soi que la longueur Lb des chaque bras gonflable 4 peut être différente suivant l'utilisation du drone 1. En particulier chaque bras gonflable 4 peut présenter une longueur Lb supérieure à 2000 mm.

Comme représenté sur la [Fig.1], chaque bras gonflable 4 présente de préférence une section, dans le plan (X, Z), circulaire présentant un diamètre compris entre 10 mm et 250 mm.

De préférence encore, chaque bras gonflable 4 est configuré pour présenter, lorsqu'il est gonflé, un volume d'air compris entre 10000 mm³ et 10000000 mm³. Un tel volume permet de limiter la trainée des moteurs 5 et donc la consommation du drone 1, tout en garantissant une bonne flottaison lorsqu'il est posé sur un plan d'eau. Dans le cas d'un bras gonflable 4 dont la longueur serait supérieure à 2000 mm, il va de soi que le bras gonflable 4 présenterait lorsqu'il est gonflé un volume d'air supérieur à 10000000 mm³

De préférence chaque bras gonflable 4 est réalisé dans une matière textile, souple et flexible. Chaque bras gonflable 4 comprend une enveloppe gonflable intérieure, appelée également chambre à air, et une enveloppe de protection extérieure, l'enveloppe gonflable étant montée dans l'enveloppe de protection.

L'enveloppe gonflable est réalisée de préférence en polyuréthane et possède une épaisseur de paroi de 80µm. Il va de soi que l'enveloppe gonflable pourrait posséder des caractéristiques différentes. Par exemple, l'enveloppe gonflable pourrait être en latex. L'enveloppe gonflable peut se gonfler et se dégonfler via une valve de gonflage (non représentée). De manière préférée, l'enveloppe intérieure est adaptée pour être gonflée à une pression comprise entre 140 MPa (1.4 bar) et 160 MPa (1.6 bar).

L'enveloppe de protection est de préférence réalisée dans un matériau peu extensible afin de limiter l'expansion de l'enveloppe intérieure lors de son gonflage. De préférence, son module d'élasticité (Module de Young) est de l'ordre de 80 GPa. Autrement dit, l'enveloppe de protection permet de définir les dimensions finales de chaque bras gonflable 4 lors de son utilisation. De préférence, l'enveloppe de protection est réalisée dans un matériau résistant aux chocs et aux coupures, par exemple, un matériau connu sous la dénomination commerciale DACRON ^{®}.

Grâce à la forme longitudinale de chaque bras gonflable 4 selon l'invention, le nombre de coutures est fortement limité par rapport au nombre de coutures d'une structure présentant une forme d'étoile. L'enveloppe gonflable intérieure présente également une forme simple, ce qui permet d'améliorer l'étanchéité. Les moteurs 5 positionnés aux extrémités d'un même bras gonflable 4 sont peu susceptibles d'être désalignés. De plus, chaque bras gonflable 4 présente une meilleure résistance et donc une meilleure durée de vie. De plus, chaque bras gonflable 4 présentant une forme longitudinale, les efforts de pression dus au gonflage sont répartis de façon uniforme, ce qui permet de limiter l'apparition de zones fragiles.

Toujours en référence à la [Fig.1], chaque bras gonflable 4 présente une surface supérieure 45 et une surface inférieure 46, opposée à la surface supérieure 45, suivant l'axe vertical Z s'étendant du bas vers le haut. De préférence, les moteurs 5 sont montés sur la surface supérieure 45 de chaque bras gonflable 4 de manière à générer un flux d'air descendant permettant le vol du drone 1 suivant l'axe vertical Z, par exemple pendant une phase de décollage.

Dans une forme de réalisation préférée, chaque bras gonflable 4 comprend une pluralité de portions de formes différentes.

En référence aux figures 1 et 2, chaque bras gonflable 4 comprend uniquement deux portions latérales 41 s'étendant de part et d'autre d'un plan médian P, parallèle au plan (X, Z). Les deux portions latérales 41 sont de préférence similaires et symétriques par rapport au plan médian P.

Chaque portion latérale 41 comprend une extrémité de support 42 d'un moteur 5. Chaque bras gonflable 4 comprend ainsi deux extrémités de support 42 s'étendant latéralement sur le drone 1 aux extrémités du bras gonflable 4 suivant l'axe orthogonal V. Un moteur 5 est ainsi fixé à chaque extrémité de support 42, de manière à maximiser l'envergure du drone 1 et à augmenter sa stabilité en vol.

En référence à la [Fig.3], chaque portion latérale 41 possède une section circulaire décroissante vers l'extrémité de support 42. De préférence, chaque portion latérale 41 présente une forme tronconique, permettant de limiter la trainée générée par chaque moteur 5 et ainsi d'augmenter le flux d'air généré par chaque moteur 5. Une telle forme tronconique permet ainsi de limiter les perturbations et ainsi d'augmenter le rendement de chaque moteur 5 et donc la vitesse du drone 1. En particulier, une section important de chaque portion latérale 41 au niveau du plan médian P permet d'améliorer la flottabilité au centre du drone 1, c'est-à-dire, à proximité du châssis support 3.

Dans une forme de réalisation préférée, chaque extrémité de support 42 de chaque portion latérale 41 est inclinée par rapport à l'axe orthogonal V suivant l'axe vertical Z. Autrement dit, chaque extrémité de support 42 est inclinée vers le haut, lorsque le drone 1 est dans la position d'utilisation. Ainsi, chaque bras gonflable 4 possède sensiblement une forme de « V » ou de « banane » de manière à ce que les extrémités de support 42 soient à une altitude plus élevée. Il existe ainsi un plus grand volume d'air au centre du drone 1, ce qui améliore la flottaison (théorème d'Archimède).

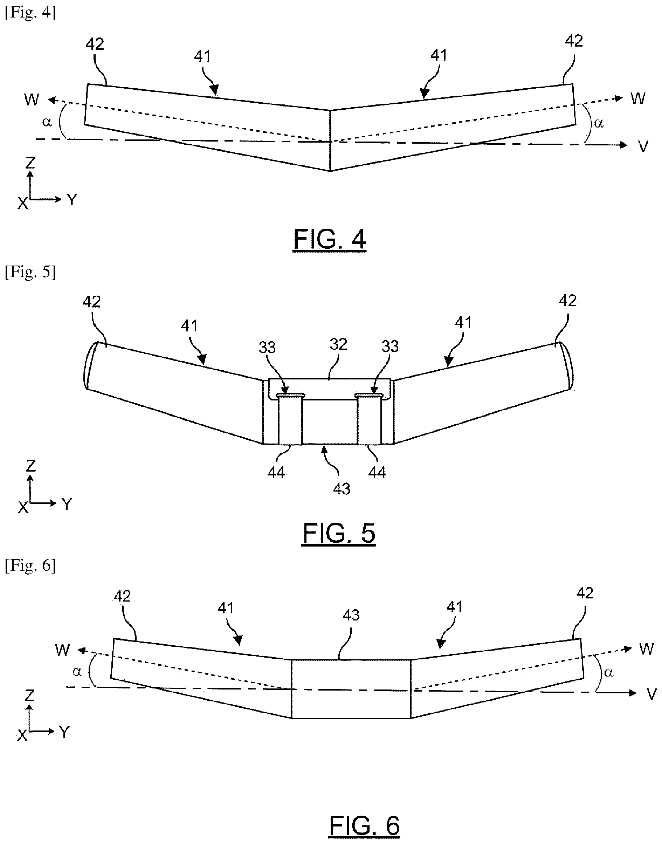

Plus précisément, comme représenté sur la [Fig.4], chaque portion latérale 41 s'étend suivant un axe latéral W appartenant à un plan orthogonal à l'axe longitudinal X. L'axe latéral W est incliné par rapport à l'axe orthogonal V d'un angle d'inclinaison α compris entre 5 et 30 °. De préférence, l'angle d'inclinaison α est compris entre 5° et 10°. Un tel angle d'inclinaison α permet avantageusement d'améliorer la position des moteurs 5 par rapport à la ligne de flottaison du drone 1 lorsque le drone 1 est sur une étendue d'eau. Les hélices des moteurs 5 sont ainsi plus éloignées de la surface de l'eau, ce qui permet de faciliter le décollage du drone 1 par exemple. Autrement dit, la garde au sol du drone 1 est augmentée. Dans cet exemple, l'angle d'inclinaison α est de l'ordre de 7,5°.

Une portion latérale 41 inclinée permet également de faciliter une inclinaison des moteurs 5 par rapport à l'axe Z, c'est-à-dire de les orienter vers le plan médian P, de manière à générer un flux d'air vers l'extérieur du drone 1, limitant les risques de perturbations des flux d'un moteur 5 et des différents moteurs 5 entre eux. La stabilité du drone 1, notamment lors d'une descente, est ainsi améliorée.

En référence aux figures 2 et 3, chaque bras gonflable 4 est de préférence relié au châssis support 3 de manière centrée. Autrement dit, chaque moteur 5 se trouve à équidistance de l'extrémité amont 31 (ou de l'extrémité aval 32) du châssis support 3 de manière à répartir équitablement la masse des moteurs 5 et du châssis support 3. Ainsi, les moteurs 5 sont uniformément répartis sur le drone 1 permettant d'assurer sa stabilité en vol.

Afin de relier les bras gonflables 4 au châssis support 3, chaque bras gonflable 4 comprend une pluralité d'organes d'accrochage 44, permettant une liaison simple et rapide. De préférence les organes d'accrochage 44 permettent une liaison amovible de chaque bras gonflable 4 sur le châssis support 3.

De préférence, chaque organe d'accrochage 44 se présente sous la forme d'une lanière solidaire du bras gonflable 4 configurée pour coopérer avec l'un des orifices de fixation 33 du châssis support 3, décrit précédemment. Dans une forme de réalisation, chaque organe d'accrochage 44 se présente sous la forme d'une liaison de type boucles et crochets, par exemple du type Velcro ^{®}. Une telle liaison permet une fixation manuelle rapide, sans nécessiter l'utilisation d'un outillage particulier. Il va de soi que la fixation peut se présenter sous une forme différente, par exemple au moyen d'un bouton pression, d'un aimant ou d'un adhésif.

Chaque organe d'accrochage 44 est de préférence cousu sur l'enveloppe de protection de chaque bras gonflable 4. Ainsi chaque organe d'accrochage 44 est fixe sur le bras gonflable 4 de manière à limiter les risques de désalignement des moteurs 5 et donc des perturbations en vol. En effet, une liaison de type boucle et crochet permet aisément de tourner chaque bras gonflable 4 autour de l'axe orthogonal V pour aligner simplement les moteurs 5. Le montage du drone 1 depuis la position de stockage dans la position d'utilisation est ainsi facile à réaliser, de même que le remplacement d'un bras gonflable 4 en cas de défaillance d'un moteur 5 par exemple.

De préférence, chaque bras gonflable 4 comprend deux organes d'accrochage 44 réparties longitudinalement sur chaque portion latérale 41. Les deux organes d'accrochage 44 sont de préférence répartis de part et d'autre du plan médian P, à égale distance de celui-ci, de manière à s'assurer que les moteurs 5 sont répartis de manière uniforme autour du châssis support 3.

En référence aux figures 5 et 6, dans une deuxième forme de réalisation de l'invention, chaque bras gonflable 4 comprend une portion centrale 43 entre les deux portions latérales 41, permettant d'augmenter la quantité d'air au niveau du plan médian P, ce qui permet d'élever la ligne de flottaison du drone 1. La portion centrale 43 est de préférence de forme cylindrique et présente une section circulaire comprise de préférence entre 10 mm et 250 mm.

Dans cette forme de réalisation, chaque bras gonflable 4 est relié au châssis support 3 au niveau de la portion centrale 43, permettant de simplifier la liaison entre le châssis support 3 et chaque bras gonflable 4 en offrant une portion de liaison droite, apte à coopérer avec les portions concaves l'extrémité amont 31 et l'extrémité aval 32 du châssis support 3. Les organes d'accrochage 44 sont, dans cet exemple, de préférence fixé sur le bras gonflable 4 au niveau de la portion centrale 43.

De manière connue, le drone 1 peut également comporter un équipement d'enregistrement (non représenté), tel qu'une caméra vidéo par exemple, qui est fixé au châssis support 3 et est relié fonctionnellement au module de gestion 6.

De manière connue, le module de gestion 6 comporte également une batterie d'alimentation afin d'alimenter électriquement les moteurs 5 et les équipements du drone 1.

La structure principale en forme de H du drone selon l'invention permet une structure simple, dans laquelle le nombre de coutures est limité. Ainsi la chambre à air n'est pas fragilisée et l'étanchéité de la structure gonflable n'est pas affectée. La structure simple selon l'invention permet également le remplacement simple et rapide par un utilisateur d'un moteur ou d'un bras gonflable en cas de défaillance.

## Revendications

1. Aéronef (1) sans pilote télécommandé comprenant au moins deux moteurs (5), configurés pour permettre le vol de l'aéronef (1), et une structure principale (2) de support desdits moteurs (5), la structure principale (2) étant flexible et gonflable de manière à permettre le pliage de la structure principale (2) entre une position de stockage et une position d'utilisation, la structure principale (2) comportant :
- un châssis support (3) s'étendant longitudinalement entre une extrémité amont (31) et une extrémité aval (32) suivant un axe longitudinal (X), et
- des bras gonflables (4) reliés au châssis support (3) respectivement au niveau de l'extrémité amont (31) et de l'extrémité aval (32), chaque bras gonflable (4) s'étendant orthogonalement au châssis support (3), de manière à former une structure principale (2) en forme de H, l'aéronef étant
**caractérisé en ce que** la structure principale (2) comporte uniquement deux bras gonflables (4), chaque bras gonflable comprenant deux portions latérales comprenant chacune une extrémité de support de moteur (5).

2. Aéronef (1) selon la revendication 1, dans lequel chaque portion latérale (41) possède une section décroissante vers l'extrémité de support (42).

3. Aéronef (1) selon la revendication 2, dans lequel les portions latérales (41) sont inclinées de manière à former un bras gonflable (4) coudé.

4. Aéronef (1) selon l'une des revendications 2 et 3, dans lequel, chaque bras gonflable (4) définissant un axe orthogonal (V) audit axe longitudinal (X) dans un plan horizontal, chaque portion latérale (41) est inclinée verticalement vers le haut par rapport audit axe orthogonal (V) d'un angle d'inclinaison (α) compris entre 5 ° et 30 °.

5. Aéronef (1) selon l'une des revendications 2 à 4, dans lequel chaque portion latérale (41) présente une forme tronconique.

6. Aéronef (1) selon l'une des revendications 2 à 5, dans lequel chaque bras gonflable (4) comprend une portion centrale (43) de forme cylindrique entre les deux portions latérales (41).

7. Aéronef (1) selon la revendication 6, dans lequel, le châssis support (3) est relié à chaque bras gonflable (4) au niveau de la portion centrale (43).

8. Aéronef (1) selon l'une des revendications 1 à 7, dans lequel le châssis support (3) est relié aux deux bras gonflables (4) de manière amovible.

9. Aéronef (1) selon l'une des revendications 1 à 8, dans lequel chaque bras gonflable (4) comprend au moins un organe d'accrochage (44) au châssis support (3).

10. Aéronef (1) selon la revendication 9, dans lequel, le châssis support (3) comprenant au moins un orifice de fixation (33), l'organe d'accrochage (44) se présente sous la forme d'une lanière solidaire d'un bras gonflable (4), configurée pour s'insérer dans l'orifice de fixation (33) du châssis support (3).

11. Aéronef (1) selon l'une des revendications 1 à 10, dans lequel chaque bras gonflable (4) comprenant deux extrémités, l'aéronef (1) comprenant quatre moteurs (5), un moteur (5) est fixé à chaque extrémité de chaque bras gonflable (4).

## Patentansprüche

1. Ferngesteuertes unbemanntes Flugzeug (1), das mindestens zwei Motoren (5) umfasst, die ausgelegt sind, um den Flug des Flugzeugs (1) zu ermöglichen, und eine Hauptstruktur (2) zum Tragen der Motoren (5), wobei die Hauptstruktur (2) flexibel und aufblasbar ist, sodass die Hauptstruktur (2) zwischen einer Lagerposition und einer Gebrauchsposition faltbar ist, wobei die Hauptstruktur (2) umfasst:
- ein Traggestell (3), das sich längs zwischen einem vorderen Ende (31) und einem hinteren Ende (32) gemäß einer Längsachse erstreckt (X), und
- aufblasbare Arme (4), die mit dem Traggestell (3) jeweils im Bereich des vorderen Endes (31) und des hintern Endes (32) verbunden sind, wobei sich jeder aufblasbare Arm (4) orthogonal zum Traggestell (3) erstreckt, so dass eine H-förmige Hauptstruktur (2) gebildet wird, wobei das Flugzeug **dadurch gekennzeichnet ist, dass** die Hauptstruktur (2) nur zwei aufblasbare Arme (4) aufweist, wobei jeder aufblasbare Arm zwei Seitenabschnitte umfasst, die jeweils ein Motorträgerende (5) umfassen.

2. Flugzeug (1) nach Anspruch 1, wobei jeder Seitenabschnitt (41) einen zum Trägerende (42) abnehmenden Querschnitt aufweist.

3. Flugzeug (1) nach Anspruch 2, wobei die Seitenabschnitte (41) derart geneigt sind, dass sie einen gekrümmten aufblasbaren Arm (4) bilden.

4. Flugzeug (1) nach einem der Ansprüche 2 und 3, wobei, wobei jeder aufblasbare Arm (4) eine orthogonale Achse (V) zur Längsachse (X) in einer horizontalen Ebene definiert, jeder Seitenabschnitt (41) vertikal nach oben in Bezug zu dieser orthogonalen Achse (V) in einem Neigungswinkel (α) von 5 ° bis 30 ° geneigt ist.

5. Flugzeug (1) nach einem der Ansprüche 2 bis 4, wobei jeder Seitenabschnitt (41) eine konische Form aufweist.

6. Flugzeug (1) nach einem der Ansprüche 2 bis 5, wobei jeder aufblasbare Arm (4) einen zylinderförmigen Mittelabschnitt (43) zwischen den beiden Seitenabschnitten (41) umfasst.

7. Flugzeug (1) nach Anspruch 6, wobei das Traggestell (3) mit jedem aufblasbaren Arm (4) im Bereich des Mittelabschnitts (43) verbunden ist.

8. Flugzeug (1) nach einem der Ansprüche 1 bis 7, wobei das Traggestell (3) mit den beiden aufblasbaren Armen (4) lösbar verbunden ist.

9. Flugzeug (1) nach einem der Ansprüche 1 bis 8, wobei jeder aufblasbare Arm (4) wenigstens ein Einhängeelement (44) am Traggestell (3) umfasst.

10. Flugzeug (1) nach Anspruch 9, wobei das Traggestell (3) wenigstens eine Befestigungsöffnung (33) umfasst, wobei das Einhängeelement (44) in Form einer mit einem aufblasbaren Arm (4) verbundenen Schlaufe vorliegt, die ausgebildet ist, um sich in die Befestigungsöffnung (33) des Traggestells (3) einzupassen.

11. Flugzeug (1) nach einem der Ansprüche 1 bis 10, wobei jeder aufblasbare Arm (4) zwei Enden umfasst, wobei das Flugzeug (1) vier Motoren (5) umfasst, wobei an jedem Ende jedes aufblasbaren Arms (4) ein Motor (5) befestigt ist.

## Claims

1. An unmanned remote-controlled aircraft (1) comprising at least two engines (5), configured to allow flight of the aircraft (1), and a main structure (2) supporting said engines (5), the main structure (2) being flexible and inflatable so as to allow folding of the main structure (2) between a storage position and a use position, the main structure (2) comprising:
- a support chassis (3) longitudinally extending between an upstream end (31) and a downstream end (32) along a longitudinal axis (X), and
- inflatable arms (4) connected to the support chassis (3) respectively at the upstream end (31) and the downstream end (32), each inflatable arm (4) orthogonally extending to the support chassis (3), so as to form an H-shaped main structure (2), the aircraft being **characterised in that** the main structure (2) comprises only two inflatable arms (4), each inflatable arm comprising two side portions each comprising an engine support end (5).

2. The aircraft (1) according to claim 1, wherein each side portion (41) has a cross-section decreasing toward the support end (42).

3. The aircraft (1) according to claim 2, wherein the side portions (41) are tilted so as to form a bent inflatable arm (4).

4. The aircraft (1) according to one of claims 2 and 3, wherein, each inflatable arm (4) defining an axis (V) orthogonal to said longitudinal axis (X) in a horizontal plane, each side portion (41) is vertically tilted upwards with respect to said orthogonal axis (V) by a tilt angle (α) of between 5° and 30°.

5. The aircraft (1) according to one of claims 2 to 4, wherein each side portion (41) has a frustoconical shape.

6. The aircraft (1) according to one of claims 2 to 5, wherein each inflatable arm (4) comprises a central portion (43) having cylindrical shape between both side portions (41).

7. The aircraft (1) according to claim 6, wherein the support chassis (3) is connected to each inflatable arm (4) at the central portion (43).

8. The aircraft (1) according to one of claims 1 to 7, wherein the support chassis (3) is removably connected to both inflatable arms (4).

9. The aircraft (1) according to one of claims 1 to 8, wherein each inflatable arm (4) comprises at least one member (44) for fastening to the support chassis (3).

10. The aircraft (1) according to claim 9, wherein, the support chassis (3) comprising at least one attachment hole (33), the fastening member (44) is in the form of a strap integral with an inflatable arm (4), configured to insert into the attachment hole (33) of the support chassis (3).

11. The aircraft (1) according to one of claims 1 to 10, wherein, each inflatable arm (4) comprising two ends, the aircraft (1) comprising four engines (5), an engine (5) is attached to each end of each inflatable arm (4).
